# EUROPEAN PATENT SPECIFICATION

(11) **EP 4 003 105 B1**
(45) Date of publication and mention of the grant of the patent: **02.08.2023**
(21) Application number: 20742265.0
(22) Date of filing: 21.07.2020
(51) Int. Cl.: A47J 31/00, A47J 31/40

(54) **METHOD FOR PREPARING MILK AND COFFEE BASED BEVERAGES**
VERFAHREN ZUR HERSTELLUNG VON GETRÄNKEN AUF MILCH- UND KAFFEEBASIS
PROCÉDÉ DE PRÉPARATION DE BOISSONS À BASE DE LAIT ET DE CAFÉ

(30) Priority: 29.07.2019 EP 19188741
(43) Date of publication of application: 01.06.2022
(73) Proprietor: Société des Produits Nestlé S.A., 1800 Vevey (CH)
(72) Inventor: MIEVILLE, Yann, 1405 POMY (CH); SEKULIC, Aleksandar, 1008 Prilly (CH); RACINE, Hugues, 25300 PONTARLIER (FR); RAWYLER, Fabien, 1566 Saint-Aubin (CH)
(74) Representative: Ducreux, Marie
(86) International application number: PCT/EP2020/070532
(87) International publication number: WO 2021/018667

(56) References cited:
- EP-A1- 1 702 544
- EP-A1- 2 127 567
- WO-A1-2016/202655
- WO-A1-2017/045876
- US-B2- 6 977 091

## Description

### Field of the invention

The present invention relates to a method for preparing milk and coffee based beverages from soluble milk and coffee powder.

### Background of the invention

WO 2008/071613 describes a beverage preparation machine comprising a mixing chamber for preparing frothed beverages wherein a dose of a beverage soluble powder is mixed with a water. This mixing chamber presents the great advantage of being devoid of any agitating device driven by a motor, like an impeller or a whipper, or any motorised device to close the beverage outlet, like a clamping device. The agitation, dissolution and frothing is obtained by the force of water jet introduced inside the chamber only. Beverage remains inside the beverage during the preparation due to the driven force of the liquid swirl. As a result, the manufacturing cost of the machine is low.

Such a mixing chamber is particularly adapted for preparing a coffee from soluble instant coffee or a frothed milk from soluble milk powder. The process of preparation consists in introducing a dose of soluble powder inside the chamber and then introducing water to dissolve the powder. The mixing chamber provides sufficient agitation with the water to dissolve and froth the coffee or the milk.

In order to be able to prepare a beverage made of a coffee component and a milk component, in particular a cappuccino, it would be advantageous to use a beverage machine comprising two mixing chambers, one being dedicated to the preparation of coffee, and the other chamber being dedicated to the preparation of milk. Yet, when a cappuccino is prepared with such a beverage machine and dispensed in a transparent drinking receptacle, it is observed that several distinct horizontal layers of different graded brown colours are present. These layers are not always desired by consumers because they can be perceived as an insufficient mixing of milk and coffee. For some targeted consumers, this layering effect must be avoided.

WO 2017/045876 shows a method for producing a beverage by dissolution of at least one soluble beverage powder with water in a beverage preparation apparatus.

An object of the invention is to address this problem.

### Summary of the invention

There is provided a method for producing a beverage by dissolution of at least one soluble beverage powder with water in a beverage preparation apparatus,
said apparatus comprising :
   - one milk chamber configured for receiving and mixing a dose of soluble milk powder with water to prepare milk and for dispensing milk to a drinking receptacle receiving area, and
   - one coffee chamber for receiving and mixing a dose of soluble coffee powder with water to prepare coffee and for dispensing coffee to the drinking receptacle receiving area, and
   - a nozzle for delivering a jet of water to the drinking receptacle receiving area,
   and
said method comprising the steps of :
   a1) preparing frothed milk within the milk chamber and dispensing said frothed milk inside a drinking receptacle at the receiving area, then
   a2) preparing coffee within the coffee chamber and dispensing said coffee inside the drinking receptacle comprising frothed milk at the receiving area, the beverage resulting from step a2) forming visual layers inside the drinking receptacle,
   b) jetting water inside the drinking receptacle at the receiving area after step a2).

The method is implemented in a beverage preparation apparatus comprising at least one chamber configured for receiving and mixing at least one soluble beverage powder with water. Mixing enables dissolution of soluble powder in water, and eventually frothing of the resulting beverage. The chamber comprises an outlet to dispense the beverage in a drinking receptacle.

Generally, the beverage preparation apparatus comprises at least one soluble beverage powder reservoir. Accordingly, doses of powder can be dispensed from the reservoir to the chamber. This reservoir can be disposable or not.

Usually, the apparatus comprises a dosing device associated to the reservoir in order to meter the dose of soluble beverage powder dispensed in the chamber.

Generally the reservoir and the dosing device are placed above the chamber in order to feed it by gravity fall. Generally the dosing device can be associated to a powder reservoir.

In a particular embodiment, the chamber can be fed with soluble beverage powder manually, for example with a spoon or a single serve packaging (e.g. stick).

Generally, the apparatus comprises a water supply system connectable to at least one water inlet of the chamber.

Water can be supplied either hot or cold. Generally the water supply system of the apparatus comprises at least a water tank or water supply, a water pump, a water heater and/or cooler and a valve for actuating the water delivery. The system can also comprise a selection valve for delivering water at either hot or cold temperature.

The apparatus comprises an area for receiving a drinking receptacle like a cup, mug or glass. The beverage outlet of the mixing chamber is configured to dispense beverage to this area. The area enables the consumer to correctly position the receptacle in the apparatus so that it is filled by the beverage prepared in the mixing chamber.

With the present method, a beverage is prepared with said at least one chamber and dispensed inside a drinking receptacle at the receiving area, and, inside the drinking receptacle, the beverage forms layers that can be observed when the receptacle is transparent, for example a receptacle made of glass.

The formation of layers is a common observed phenomenon. It is usually related to the densities, the temperatures and the volumes of prepared beverages. For example, it is a common phenomenon for a volume of 100 ml of frothed milk prepared at a temperature of 82°C and at a density of 0,11 g/ml (due to the fact it is frothed).

This type of layers for milk can be observed with most of the chambers used to prepare milk from milk powder.

With other beverages, the effect of layering can be due to the design of the preparation chamber, in particular the design of the outlet and/or the sequence of mixing beverage soluble powder with water inside the chamber that can lead to variable densities of the same beverage during dispensing in the drinking receptacle.

The apparatus comprises a nozzle for delivering a jet of water directly to this drinking receptacle receiving area and in particular to any receptacle positioned in this area to receive the prepared beverage. The nozzle is usually connected to the same water supply system as the chamber and is configured to deliver a jet of water.

By jet it is understood a stream of water that comes out of the nozzle and in the receptacle quickly and with force. Accordingly, the nozzle is configured for introducing water in the receptacle with a high velocity. The effects of this jet of water inside the beverage presenting layers is agitation of these layers, the homogenisation of the beverage and the disapparition of the layers.

The size of the water nozzle outlet, the distance to the receptacle and the flow rate of water are generally adapted accordingly to get the high velocity of the jet and an agitating effect inside the beverage hold in the receptacle.

Generally, the nozzle presents an outlet section with a surface area equivalent to the surface of a circular surface of diameter comprised between 0,2 and 1,0 mm, preferably between 0,3 and 0,9 mm and even more preferably of about 0,7 mm.

Preferably water is introduced in such a nozzle at a flow rate of at least 300 ml/min. Preferably, the receptacle is positioned at a distance comprised between 1 and 10 cm from the outlet of the nozzle.

Generally, during step b), less than 5 ml of water is jetted through the nozzle. This small quantity dispensed at high velocity is sufficient to homogenise the beverage.

The method is implemented in a beverage preparation apparatus comprising :
- one milk chamber configured for receiving and mixing a dose of soluble milk powder with water to prepare milk and for dispensing milk to a drinking receptacle receiving area, and
- one coffee chamber for receiving and mixing a dose of soluble coffee powder with water to prepare coffee and for dispensing coffee to the drinking receptacle receiving area, and
the method comprises the steps of:
a1) preparing frothed milk within the milk chamber and dispensing said frothed milk inside a drinking receptacle at the receiving area, then
a2) preparing coffee within the coffee chamber and dispensing said coffee inside the drinking receptacle comprising frothed milk at the receiving area,
b) jetting water inside the drinking receptacle at the receiving area after step a2).

The two first steps a1) and a2) correspond to the usual preparation of a cappuccino beverage that is introducing coffee inside a receptacle filled with frothed milk. Yet, due to the creation of layers inside the cappuccino when these two steps are implemented with coffee and frothed milk produced and dispensed from the coffee chamber and the milk chamber, an additional step is implemented : that is the step b) of jetting a small quantity of water inside the receptacle after the step a2) of preparing and dispensing coffee in the receptacle.

In this preferred embodiment, preferably each of said two chambers comprises :
- an opened top to receive a dose of powder, and
- a lateral side wall, said lateral side wall comprising a water inlet, and
- a bottom wall, said bottom wall comprising a beverage outlet conduit,
said conduit being designed to dispense beverage to a drinking receptacle receiving area, wherein the water inlet and the internal shape of the chamber are configured so that water introduced through the water inlet is able to form a swirl inside the chamber,

Preferably, each chamber is dedicated to the preparation of one beverage component: one is dedicated to the preparation of frothed milk and the other to the preparation of coffee.

The two chambers present several common features. These features are configured to enable the preparation of a beverage from soluble beverage powder and water without the use of a motorised agitating device and without the use of a device for closing the outlet of the chamber.

Each chamber comprises a lateral side wall. Preferably, the chambers are positioned in the apparatus so that their lateral side walls are substantially vertical.

Usually, for each chamber, the top is at least partially opened. Soluble beverage powder can be introduced in the chambers through the opened tops by gravity fall.

The lateral side wall of each chamber comprises a water inlet.

The water inlet and the internal shape of the chamber are configured so that water introduced through the water inlet is able to form a swirl, preferably an ascending swirl, inside the chamber.

Preferably this water inlet is positioned in the lower part of the chamber that is essentially cylindrical. Accordingly the chamber is filled with water from the bottom.

Usually, the water inlet is configured so that water is introduced in the chamber under the form a straight jet of water. Again, by jet, it is understood a stream of water that comes out of the water inlet and in the chamber quickly and with force. Accordingly, the water inlet is configured for introducing water inside the chamber with a high velocity. Usually, this straight jet is produced by and emerges from a nozzle positioned in the water inlet of the lateral wall of the chamber. Accordingly, the water inlet preferably comprises a nozzle.

According to a less preferred embodiment, this nozzle can be designed inside the cylindrical lateral side wall. Consequently, the chamber and the nozzle can be made of one single piece of material.

The size of the water nozzle outlet, the diameter of the chamber and the flow rate of the water are generally adapted accordingly to get the high velocity of the jet and the swirling effect for water.

Generally, the nozzle presents an outlet section with a surface area equivalent to the surface of a circular surface of diameter comprised between 0,2 and 0,8 mm, preferably between 0,3 and 0,6 mm and even more preferably of about 0,5 mm.

Optionally, a second water inlet can be placed near the top of the chamber. It aims at introducing further water in the case the chamber would be used for producing a beverage with no foam. It enables a final rinsing of the chamber too.

Preferably, the water inlet is also oriented so that the straight jet of water extends transversely through the internal volume of the chamber along a line L, said line L being offset relative to the longitudinal central axis of the chamber.

More specifically, the line L is oriented in a direction so that a ratio d/r₀ is comprised between 0,2 and 0,4, preferably is of about 0,3, where r₀ is the radius of the cylindrical lateral side wall of the chamber and d is the distance measured orthogonally from the line L to the central longitudinal axis of the chamber. This configuration improves the dissolution of the powder.

For each chamber, the bottom wall is positioned below the lateral wall and, accordingly, the water inlet is positioned above the bottom wall.

Generally, for each chamber, the beverage outlet is a conduit, preferably vertically oriented. The beverage outlet conduit usually presents a circular cross section, yet other shape can be implemented like oval shape. The conduit is preferably at least partially straight. The outlet conduit is opened. The outlet conduit is deprived of any closing means.

The water inlet and the internal shape of the chamber are configured so that water introduced through the water inlet is able to form an ascending swirl inside the chamber. The effect of this ascending swirl is that effective mixing of water and powder, dissolution of soluble powder and frothing of the resulting beverage is obtained. As long as water is introduced through the water inlet, the swirl rises and keeps contact between water and powder. In addition the swirl is impacted by the water still introduced through the water inlet with the effect of increasing mixing and frothing. These features and associated effects are described in WO 2008/071613.

Generally, the coffee chamber can present the features of the mixing chamber described in WO 2008/071613.

In a particular embodiment, the coffee chamber can present specific features such as those described in WO 2018/091358. These features aim to get a better dissolution and frothing of coffee. They particularly relate to the presence of :
- a first internal bump rising from the bottom wall of the coffee chamber, said first bump separating :
   - a first area of the bottom part of the coffee chamber wherein the introduced straight jet extends horizontally and transversely through the internal volume of the coffee chamber along a line L
   - from a second area of the bottom part of the coffee chamber comprising the beverage outlet,
   and
- a second bump rising from the bottom and extending from the lateral side wall of the coffee chamber and presenting a shape designed :
   - to convert the introduced straight jet of liquid extending horizontally and transversely through the internal volume of the coffee chamber into a swirl upwardly rising along the lateral side wall of the coffee chamber, and
   - to guide said swirl so that it flows along the line L in front of the liquid inlet.

Preferably, the milk chamber presents specific features to get a better dissolution and frothing of large volume of milk powder and water necessary to produce frothed milk.

Preferably, the bottom wall of the milk chamber presents the shape of a funnel inclined in direction of the beverage outlet conduit. As a result, the bottom wall is inclined in respect of horizontal in direction of the beverage outlet in order to facilitate the full dispensing of the beverage. Usually, the bottom wall is inclined by an angle of at least 30° with horizontal, preferably comprised between 30 and 60°.

Preferably, the lower part of the lateral side wall is essentially cylindrical. The rest of the lateral side wall can be cylindrical too or can open out to increase the horizontal cross section of the chamber. Usually, in the upper part, the cross section presents a curved shape close to a circular section.

The beverage outlet of the milk chamber can comprise several successive conduits with decreasing cross sections.

The cross section of the conduit is sufficiently large to enable the rapid dispensing of a large quantity of the frothed milk. Preferably, the hydraulic diameter of the conduit of the beverage outlet is of at least 5 mm. By hydraulic diameter, it is meant the diameter of a conduit with round-shaped section presenting the same cross section area as the conduit with a section of a different shape.

Preferably, the cross section of the conduit is subdivided in at least two, even more preferably four straight equal sub-conduits.

According to the preferred embodiment, the cross section of the conduit can be subdivided by a removable divider extending longitudinally through the main conduit. This removable property enables a thorough cleaning of the divider and the conduit. Preferably, a rod is attached to the removable divider, said rod extending to the top of the chamber when the divider is positioned inside the conduit. This rod facilitates the removal of the divider from the conduit by the operator.

Preferably the divider presents the shape of a cross dividing the cross section of the conduit in four equal channels.

A specific effect of this divider is that it prevents the rotation of the swirling milk inside the beverage conduit. Swirling beverage is not desired in the conduit because it presents drawbacks such as :
- slowing down the dispensing, and
- splashing in place of dispensing a straight flow of milk in the drinking receptacle .

Usually the internal volume defined by the walls of the milk chamber is sufficient to enable the preparation of a large volume of beverage and to dispense this beverage rapidly.

In the preferred embodiment, the method applies to a milk chamber presenting an internal volume of at least 100 ml and wherein the hydraulic diameter D₀ of the conduit of the beverage outlet is of at least 5 mm.

The milk chamber can present the specific features described in WO 2019/121554. In particular, at the area of the cylindrical lateral side wall opposed to the liquid inlet and crossed by the line L, the milk chamber can comprises a bump extending from the cylindrical lateral side wall inside the chamber, said bump presenting a shape designed :
- to convert the introduced straight jet of liquid extending transversely through the internal volume of the chamber into a swirl flowing along the lateral side wall off the chamber, and
- to reduce the diameter of the swirl rotating back to the bump and to guide said swirl in direction of the liquid inlet.

Usually, in each chamber, the position of the beverage outlet is offset from the longitudinal central axis of the cylindrical lateral side wall of the chamber. As the beverage preparation apparatus comprises at least two chambers, this configuration guarantees that the beverage outlets of all chambers emerge in the same area, that is in the same drinking receptacle.

The system usually comprises a selection valve for delivering water to one selected chamber only.

Generally the beverage preparation apparatus comprises a chamber receiving area in order to removably position the chamber inside the apparatus and to connect the chamber water inlet to the water supply system. Accordingly the chamber can be removed for cleaning and maintenance.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

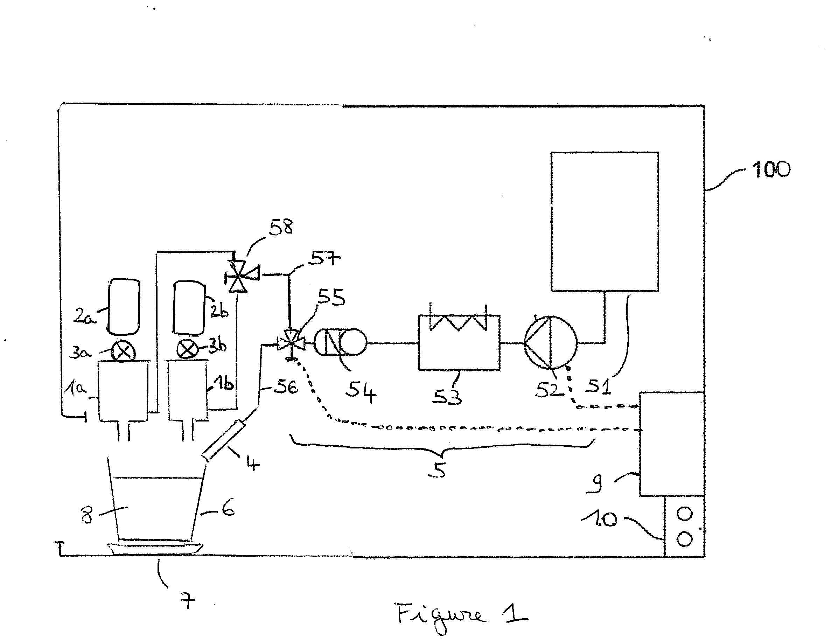

The characteristics and advantages of the invention will be better understood in relation to the following Figure 1.

### Detailed description of exemplary embodiments

**Figure 1** illustrates a beverage preparation apparatus 10 used in the method of the present invention. The apparatus includes two mixing chambers 1a, 1b for producing a beverage from a soluble beverage powder and water entering the chamber. Each chamber is dedicated to the preparation of a specific type of beverage : chamber 1a is configured for the preparation of coffee from soluble coffee powder stored in a container 2a and chamber 1b is configured for the preparation of frothed milk from soluble milk powder stored in a container 2b. Coffee and frothed milk are dispensed in a drinking 6 placed below the beverage outlets of the chamber.

Preferably, both chambers 1a, 1b are devoid of whipper, mixer, or other mechanical agitating device and are configured to dissolve and froth beverages further to the action of a flow of water only.

The beverage powder containers 2a, 2b can be permanent hoppers or disposable packages containing beverage powder.

A dose of beverage powder is metered and dispensed by a dosing device 3a, 3b. The dosing device has the primary function to meter upon request doses of powder into the corresponding mixing chamber. The dosing device dispenses the dose of beverage powder generally by gravity fall in a top opening of the chamber.

The dosing device can be any suitable system such as a dosing screw, a reciprocating dosing drawer or a rotating disc. The dosing technology is also of course dependent on the nature of the soluble powder. The soluble powder is typically a dry beverage powder, preferably milk powder. The device is fed upon request with powder as prompted by a control process unit 9 and command 10.

This dosing device can be a rotating device such as described in WO 2009/144239 or translating drawer with a dosing cavity such as described in WO 2019/016149.

The machine includes a nozzle 4 for delivering a jet of water directly inside the drinking receptacle 6 positioned to receive the beverage 8 from the chambers 1a, 1b.

Generally the nozzle 4 is a simple conduit presenting an outlet end sufficiently small to create a jet of water. While flowing through the outlet end, water reaches a sufficient velocity and therefore a sufficient kinetic energy to provide high shear forces in a beverage. The outlet end of the conduit can present a section equivalent to the section of circle of a diameter comprised between 0,2 and 1,0 mm, preferably between 0,3 and 0,9 mm, even more preferably of about 0,7 mm.

A water supplying system 5 is provided in the machine to be able to feed water in the mixing chambers 1a ,1b, and in the nozzle 4, preferably hot water.

The water supplying system comprises :
- a tank 51 that can be replenished with fresh water, or eventually connected to tap water,
- a water pump 52 for pumping water from the tank 51. The pump can be any type of pump such as a piston pump, diaphragm pump or a peristaltic pump. Preferably, the pump is configured to provide water at different flow rates depending on the use of said water (preparation of coffee, of milk, cleaning, dispensing through nozzle).
- a water heater 53 such as a thermo-block, a boiler or a cartridge type heater to heat the pumped water, alternatively or in addition to, the machine can comprise a water cooler in a line bypassing the heater,
- a non-return valve 54.

Water is fed into the mixing chambers by a tube 56, which is subdivided into the different water inlets of the chambers when several chambers are present, like in the illustrated embodiment. In a variant, not illustrated, water can be fed by two tubes in two different inlets of the same chamber.

Water is fed into the nozzle 4 by a tube 57.

A valve means 55 enables the supply of water either to the nozzle 4 or to the chambers 1a, 1b. Another valve means 58 enables the supply of water either to the chamber 1a or to the chamber 1b. Usually, these valves means 55, 58 are solenoid valves.

As illustrated in Figure 1, the mixing chambers 1a, 1b can be placed directly above a drinking receptacle receiving area 7, like a service tray 10 onto which is placed a drinking receptacle 6, preferably transparent, to receive the beverage. Generally, the mixing chambers are removable from the machine for cleaning and optionally for dosing. Usually the machine comprises a mixing chamber receiving area to removably fix the chamber inside and provide cooperation between the mixing chamber water inlet(s) and the water supply tube(s).

The control process unit 9 controls the actuation of the dosing device 3a, 3b, of the pump 52, of the heater 53 and of the valve means 55, 58. The process control unit 9 can coordinate dosing of the soluble beverage powder by the dosing device 3a, 3b and dosing of water by the pump 52 either to the chambers 1a, or the chamber 1b or to the nozzle 6 upon the user actuating or being prompted to press the command 10 on the apparatus. In Figure 1, the control of the pump 52 and the valve means 55 by the process control unit 9 have been illustrated in dotted lines. These two devices are controlled during step b) of jetting water in the beverage 8 as explained below.

When a cappuccino is prepared with the apparatus illustrated in Figure 1, the following steps are implemented :
- first, the dosing device 3b linked to the milk powder reservoir 2b is actuated in order to dispense a dose of milk powder inside the milk mixing chamber 1b,
- then the pump 52 is actuated in order to introduce hot water through the water inlet. Powder is dissolved and milk is frothed due to the kinetic energy of the jet of water. 100 ml of water is introduced.

Before the whole volume of water is introduced, frothed milk starts flowing through the opened bottom beverage outlet to the dinking receptacle. Dispensing goes on after water stops being introduced inside the chamber and until the chamber is empty.
- generally during the above period of preparation of frothed milk, coffee powder is dosed inside the coffee mixing chamber 1a further to the actuation of the dosing device 3a linked to the coffee powder reservoir 2a.
- then, once the dispensing of frothed milk has stopped, the pump 52 is actuated in order to introduce hot water through the water inlet. Coffee powder is dissolved and frothed. 75 ml of water is introduced. Coffee is dispensed from the beverage outlet 3a inside the frothed milk already present inside the drinking receptacle 6. Different layers of beverage can be observed at this point of the process.
- then, once the coffee has finished dispensing, a small volume of water (3 ml) is pumped at high flow rate and introduced inside the nozzle 4 to be jetted inside the drinking receptacle 9. This jet of water agitates liquid under the top layer foam of frothed milk and makes the below liquid layers disappear by homogenising the beverage. With a nozzle 4 presenting an outlet end of round section with a diameter of 0,4 mm, water introduced at a flow rate of at least 300 ml/min, for example at a flow rate 335 ml/min, provides the required effect in a very short time of 0,55 seconds.

This very fast injection of the water jet by the nozzle does not affect much the foam at the top of the beverage and does not affect the taste of the beverage (the dilution is minimal).

Although the invention has been described with reference to the above illustrated embodiments, it will be appreciated that the invention as claimed is not limited in any way by these illustrated embodiments.

As used in this specification, the words "comprises", "comprising", and similar words, are not to be interpreted in an exclusive or exhaustive sense. In other words, they are intended to mean "including, but not limited to".

### List of references in the drawings :

| | |
|---|---|
| coffee chamber | 1a |
| milk chamber | 1b |
| container | 2a, 2b |
| dosing device | 3a, 3b |
| nozzle | 4 |
| water supplying system | 5 |
| tank | 51 |
| pump | 52 |
| heater | 53 |
| non-return valve | 54 |
| selector | 55, 58 |
| pipe | 56, 57 |
| drinking receptacle | 6 |
| drinking receptacle receiving area | 7 |
| beverage | 8 |
| control process unit | 9 |
| command | 10 |
| beverage preparation apparatus | 100 |

## Claims

1. Method for producing a beverage by dissolution of at least one soluble beverage powder with water in a beverage preparation apparatus,
said apparatus comprising :
- one milk chamber (1a) configured for receiving and mixing a dose of soluble milk powder with water to prepare milk and for dispensing milk to a drinking receptacle receiving area (10), and
- one coffee chamber (1b) for receiving and mixing a dose of soluble coffee powder with water to prepare coffee and for dispensing coffee to the drinking receptacle receiving area (10), and
- a nozzle (4) for delivering a jet of water to the drinking receptacle receiving area (10),
and
said method comprising the steps of:
a1) preparing frothed milk within the milk chamber and dispensing said frothed milk inside a drinking receptacle (9) at the receiving area (10), then
a2) preparing coffee within the coffee chamber and dispensing said coffee inside the drinking receptacle (9) comprising frothed milk at the receiving area, the beverage resulting from step a2) forming visual layers inside the drinking receptacle,
b) jetting water inside the drinking receptacle (9) at the receiving area after step a2).

2. Method according to Claim 1 wherein the nozzle (4) for delivering a jet of water to the drinking receptacle receiving area (10) presents an outlet section with a surface area equivalent to the surface of a circular surface of diameter comprised between 0,2 and 1,0 mm, preferably between 0,3 and 0,9 mm and even more preferably of about 0,7 mm.

3. Method according to Claim 2 wherein, during step b), water is introduced in the nozzle (4) at a flow rate of at least 300 ml/min.

4. Method according to any one of the precedent claims, wherein, during step b), less than 5 ml of water is jetted through the nozzle (4).

5. Method according to any one of the precedent claims, wherein each of said chambers (1a, 1b) comprises :
- an opened top to receive a dose of powder, and
- a lateral side wall said lateral side wall comprising a water inlet, and
- a bottom wall, said bottom wall comprising a beverage outlet conduit,
said conduit being designed to dispense beverage to a drinking receptacle receiving area, wherein the water inlet and the internal shape of the chamber are configured so that water introduced through the water inlet is able to form a swirl inside the chamber,

6. Beverage preparation apparatus (100) comprising two chambers, wherein :
- one of said chambers is a milk chamber (1a) configured for receiving and mixing a dose of soluble milk powder with water to prepare milk and for dispensing milk to a drinking receptacle receiving area (7), and
- one of said chambers is a coffee chamber (1b) configured for receiving and mixing a dose of soluble coffee powder with water to prepare coffee and for dispensing coffee to the drinking receptacle receiving area (7)), and
- a nozzle (4) for delivering a jet of water to the drinking receptacle receiving area (7),
- a water supply system (5) to supply water to said at least one chamber and said nozzle,
- a control process unit (9) configured to control the water supply system (5) in order to implement the process of any one of Claims 1 to 5.

7. Beverage preparation apparatus (100) according to the precedent claim, wherein :
- the water supply system (5) comprises a pump (52) and a valve means (55) configured to supply water either to the at least one chamber (1a, 1b) or to the nozzle (4), and
- the control process unit (9) is configured to control the pump (52) and the valve means (55) in order to implement the process of any one of Claims 1 to 5.

## Patentansprüche

1. Verfahren zum Herstellen eines Getränks durch Auflösen von mindestens einem löslichem Getränkepulver mit Wasser in einer Getränkezubereitungseinrichtung,
die Einrichtung umfassend:
- eine Milchkammer (1a), die zum Aufnehmen und Mischen einer Dosis von löslichem Milchpulver mit Wasser, um Milch zuzubereiten, und zum Abgeben von Milch an einen Trinkaufnahmegefäßaufnahmebereich (10) konfiguriert ist, und
- eine Kaffeekammer (1b) zum Aufnehmen und Mischen einer Dosis von löslichem Kaffeepulver mit Wasser, um Kaffee zuzubereiten, und zum Abgeben von Kaffee an den Trinkaufnahmegefäßaufnahmebereich (10), und
- eine Düse (4) zum Zuführen eines Wasserstrahls zu dem Trinkaufnahmegefäßaufnahmebereich (10), und
das Verfahren umfassend die Schritte:
a1) Zubereiten von aufgeschäumter Milch innerhalb der Milchkammer und Abgeben der aufgeschäumten Milch im Inneren eines Trinkaufnahmegefäßes (9) an dem Aufnahmebereich (10), dann
a2) Zubereiten von Kaffee innerhalb der Kaffeekammer und Abgeben des Kaffees im Inneren des Trinkaufnahmegefäßes (9), umfassend aufgeschäumte Milch, an dem Aufnahmebereich, wobei das Getränk, das sich aus Schritt a2) ergibt, visuelle Schichten im Inneren des Trinkaufnahmegefäßes ausbildet,
b) Einspritzen von Wasser im Inneren des Trinkaufnahmegefäßes (9) an dem Aufnahmebereich nach Schritt a2).

2. Verfahren nach Anspruch 1, wobei die Düse (4) zum Zuführen eines Wasserstrahls zu dem Trinkaufnahmegefäßaufnahmebereich (10) einen Auslassabschnitt mit einem Oberflächenbereich aufweist, der gleich der Oberfläche einer kreisförmigen Oberfläche mit Durchmesser zwischen 0,2 und 1,0 mm, vorzugsweise zwischen 0,3 und 0,9 mm und noch mehr bevorzugt etwa 0,7 mm, ist.

3. Verfahren nach Anspruch 2, wobei während Schritt b) Wasser mit einer Durchflussgeschwindigkeit von mindestens 300 ml/min in die Düse (4) eingeführt wird.

4. Verfahren nach einem der vorstehenden Ansprüche, wobei während Schritt b) weniger als 5 ml Wasser durch die Düse (4) eingespritzt werden.

5. Verfahren nach einem der vorstehenden Ansprüche, wobei jede der Kammern (1a, 1b) umfasst:
- eine geöffnete Oberseite, um eine Dosis von Pulver aufzunehmen, und
- eine seitliche Seitenwand, die seitliche Seitenwand umfassend einen Wassereinlass, und
- eine Bodenwand, die Bodenwand umfassend eine Getränkeauslassleitung,
- wobei die Leitung dazu ausgelegt ist, Getränk an einen Trinkaufnahmegefäßaufnahmebereich abzugeben, wobei der Wassereinlass und die innere Form der Kammer so konfiguriert sind, dass durch den Wassereinlass eingeführtes Wasser in der Lage ist, einen Wirbel im Inneren der Kammer auszubilden,

6. Getränkezubereitungseinrichtung (100), umfassend zwei Kammern, wobei:
- eine der Kammern eine Milchkammer (1a) ist, die zum Aufnehmen und Mischen einer Dosis von löslichem Milchpulver mit Wasser, um Milch zuzubereiten, und zum Abgeben von Milch an einen Trinkaufnahmegefäßaufnahmebereich (7) konfiguriert ist, und
- eine der Kammern eine Kaffeekammer (1b) ist, die zum Aufnehmen und Mischen einer Dosis von löslichem Kaffeepulver mit Wasser, um Kaffee zuzubereiten, und zum Abgeben von Kaffee an den Trinkaufnahmegefäßaufnahmebereich (7) konfiguriert ist, und
- eine Düse (4) zum Zuführen eines Wasserstrahls zu dem Trinkaufnahmegefäßaufnahmebereich (7),
- ein Wasserversorgungssystem (5), um die mindestens eine Kammer und die Düse mit Wasser zu versorgen,
- eine Steuerprozesseinheit (9), die konfiguriert ist, um das Wasserversorgungssystem (5) zu steuern, um den Prozess nach einem der Ansprüche 1 bis 5 zu implementieren.

7. Getränkezubereitungseinrichtung (100) nach dem vorstehenden Anspruch, wobei:
- das Wasserversorgungssystem (5) eine Pumpe (52) und ein Ventilmittel (55) umfasst, die konfiguriert sind, um entweder die mindestens eine Kammer (1a, 1b) oder die Düse (4) mit Wasser zu versorgen, und
- die Steuerprozesseinheit (9) konfiguriert ist, um die Pumpe (52) und das Ventilmittel (55) zu steuern, um den Prozess nach einem der Ansprüche 1 bis 5 zu implementieren.

## Revendications

1. Procédé de production d'une boisson par dissolution d'au moins une boisson en poudre soluble avec de l'eau dans un appareil de préparation de boisson, ladite machine comprenant :
- une chambre à lait (1a) conçue pour recevoir et mélanger une dose de lait en poudre soluble avec de l'eau pour préparer du lait et pour distribuer du lait vers une zone de réception de récipient de boisson (10), et
- une chambre à café (1b) pour recevoir et mélanger une dose de café en poudre soluble avec de l'eau pour préparer du café et pour distribuer du café dans la zone de réception de récipient de boisson (10), et
- une buse (4) pour distribuer un jet d'eau à la zone de réception de récipient de boisson (10), et
ledit procédé comprenant les étapes consistant à :
a1) préparer du lait moussé à l'intérieur de la chambre à lait et distribuer ledit lait moussé à l'intérieur d'un récipient de boisson (9) au niveau de la zone de réception (10), puis
a2) préparer du café à l'intérieur de la chambre à café et distribuer ledit café à l'intérieur du récipient de boisson (9) comprenant du lait moussé au niveau de la zone de réception, la boisson résultant de l'étape a2) formant des couches visuelles à l'intérieur du récipient de boisson,
b) projeter de l'eau à l'intérieur du récipient de boisson (9) au niveau de la zone de réception après l'étape a2).

2. Procédé selon la revendication 1, dans lequel la buse (4) pour distribuer un jet d'eau vers la zone de réception de récipient de boisson (10) présente une section de sortie avec une surface équivalente à la surface d'une surface circulaire de diamètre compris entre 0,2 et 1,0 mm, de préférence entre 0,3 et 0,9 mm et encore plus préférablement d'environ 0,7 mm.

3. Procédé selon la revendication 2 dans lequel, au cours de l'étape b), de l'eau est introduite dans la buse (4) à un débit d'au moins 300 ml/min.

4. Procédé selon l'une quelconque des revendications précédentes, dans lequel, pendant l'étape b), moins de 5 ml d'eau sont projetés à travers la buse (4).

5. Procédé selon l'une quelconque des revendications précédentes, dans lequel chacune desdites chambres (1a, 1b) comprend :
- une partie supérieure ouverte pour recevoir la dose de poudre, et
- une paroi latérale, ladite paroi latérale comprenant une entrée d'eau, et
- une paroi inférieure, ladite paroi inférieure comprenant un conduit de sortie de boisson,
ledit conduit étant conçu pour distribuer une boisson dans une zone de réception d'un récipient de boisson, l'entrée d'eau et la forme interne de la chambre étant conçues de manière à ce que l'eau introduite à travers l'entrée d'eau puisse former un tourbillon à l'intérieur de la chambre,

6. Appareil de préparation de boisson (100) comprenant deux chambres, dans lequel :
- une desdites chambres est une chambre à lait (1a) conçue pour recevoir et mélanger une dose de lait en poudre soluble avec de l'eau pour préparer du lait et pour distribuer du lait vers une zone de réception de récipient de boisson (7), et
- une desdites chambres est une chambre à café (1b) conçue pour recevoir et mélanger une dose de café en café soluble avec de l'eau pour préparer du café et pour distribuer du café à la zone de réception de récipient de boisson (7), et
- une buse (4) pour distribuer un jet d'eau à la zone de réception de récipient de boisson (7),
- un système d'alimentation en eau (5) pour fournir de l'eau à ladite au moins une chambre et à ladite buse,
- une unité de traitement de commande (9) configurée pour commander le système d'alimentation en eau (5) afin de mettre en oeuvre le procédé selon l'une quelconque des revendications 1 à 5.

7. Appareil de préparation de boisson (100) selon la revendication précédente, dans lequel :
- le système d'alimentation en eau (5) comprend une pompe (52) et un moyen de soupape (55) conçu pour fournir de l'eau soit à l'au moins une chambre (1a, 1b) soit à la buse (4), et
- une unité de traitement de commande (9) est configurée pour commander la pompe (52) et le moyen de soupape (55) afin de mettre en oeuvre le procédé selon l'une quelconque des revendications 1 à 5.
